# FASCICULE DE BREVET EUROPEEN

(11) **EP 0 931 914 B1**
(45) Date de publication et mention de la délivrance du brevet: **02.07.2003**
(21) Numéro de dépôt: 99400145.1
(22) Date de dépôt: 22.01.1999
(51) Int. Cl.: F01N 7/00, F02D 41/14

(54) **Procédé de surveillance du fonctionnement d'un pot catalytique de véhicule automobile**
Verfahren zur Funktionsüberwachung des Abgaskatalysators eines Kraftfahrzeuges
Process for monitoring the operation of a catalytic converter of a motor vehicle

(30) Priorité: 26.01.1998 FR 9800796
(43) Date de publication de la demande: 28.07.1999
(73) Titulaire: Renault s.a.s., 92100 Boulogne Billancourt (FR)
(72) Inventeur: Aimard, Frédéric, 92500 Rueil Malmaison (FR); Beurthey, Stéphan, 91430 Vauhallan (FR)
(74) Mandataire: Srour, Elie

(56) Documents cités:
- EP-A- 0 521 641
- EP-A- 0 588 324
- WO-A-98/38416
- US-A- 5 363 646
- US-A- 5 431 011
- US-A- 5 487 269
- US-A- 5 622 047

## Description

L'invention concerne un procédé de surveillance du vieillissement d'un pot catalytique de véhicule automobile.

L'invention se rapporte plus particulièrement à un procédé de surveillance du fonctionnement d'un pot catalytique de véhicule automobile, du type dans lequel le véhicule comporte un moteur à combustion interne équipé d'un pot catalytique de traitement des gaz d'échappement en aval du moteur, du type dans lequel le véhicule comporte des moyens de commande de la richesse d'un mélange carburé d'alimentation du moteur, le moteur rejetant dans les gaz d'échappement des substances chimiques dont la nature varie en fonction de la valeur de la richesse autour d'une valeur de richesse unitaire correspondant à un mélange stoechiométrique, du type dans lequel, pour certains modes de fonctionnement du moteur, l'une des substances chimiques rejetées par le moteur est susceptible d'être stockée dans le pot catalytique, tandis que pour d'autres modes de fonctionnement, la substance chimique précédemment stockée est consommée au cours de réactions chimiques de catalyse, du type dans lequel deux sondes, agencées dans des conduites en amont et en aval du pot catalytique, délivrent chacune un signal qui dépend de la concentration de ladite substance chimique, respectivement en amont et en aval du pot, du type dans lequel le signal délivré par la sonde amont est proportionnel à la concentration de ladite substance et est représentatif de la richesse du mélange carburé, tandis que la sonde aval est une sonde de type "tout ou rien", du type dans lequel le procédé commande une variation périodique de la richesse du mélange carburé en commandant la richesse à un niveau de consigne supérieur à la richesse unitaire sur une demi-période, et inférieur à la richesse unitaire sur l'autre demi-période de la période considérée, et du type dans lequel le procédé détermine une valeur représentative des variations de l'intensité du signal délivré par la sonde aval.

Les moteurs à combustion interne permettent de transformer en énergie mécanique l'énergie issue de la combustion d'un mélange air/carburant. Si le mélange initial est dosé selon le rapport stoechiométrique théorique, c'est-à-dire 1 gramme de carburant pour 14,7 grammes d'air, les produits issus de la combustion sont du dioxyde de carbone (CO₂) et de l'eau (H₂O).

Toutefois, dans certaines phases de fonctionnement du moteur, le mélange carburé peut être riche, c'est-à-dire comporter un excès de carburant, ou pauvre, c'est-à-dire comporter un excès d'air.

Dans le cas d'un mélange riche, il apparaît dans les produits issus de la combustion, en plus de l'eau et du dioxyde de carbone, des molécules réductrices telles que des hydrocarbures (HC), du monoxyde de carbone (CO) et de l'hydrogène (H₂).

Dans le cas d'un mélange pauvre, il y a apparition dans les gaz d'échappement de molécules oxydantes telles que des oxydes d'azote (Nox), et de l'oxygène (O₂).

Pour limiter la production de ces substances polluantes, il est donc nécessaire que le moteur fonctionne le plus souvent possible en brûlant un mélange dosé selon les proportions stoechiométriques, mais cela n'est pas toujours possible, ni même souhaitable.

En effet, lorsque le moteur est froid ou lorsque l'on désire obtenir une puissance maximale, par exemple au cours d'une accélération du véhicule, il est nécessaire de faire fonctionner le moteur avec un mélange riche.

Au contraire, lors des phases de décélération ou lorsque le besoin de puissance est faible, on a intérêt à faire fonctionner le moteur à l'aide d'un mélange pauvre pour réduire la consommation de carburant.

Depuis plusieurs années déjà, des normes de dépollution imposent de munir les véhicules automobiles d'un pot catalytique destiné à traiter chimiquement les gaz d'échappement pour les débarrasser de la majeure partie des substances polluantes qu'ils contiennent.

Les pots catalytiques généralement utilisés ont pour première fonction d'achever la combustion du mélange carburé qui n'est qu'incomplète à l'intérieur du moteur. Il s'agit alors de regrouper sur des sites catalytiques des molécules oxydantes et des molécules réductrices présentes dans les gaz d'échappement pour qu'elles se combinent afin de produire de l'eau et du dioxyde de carbone. Ces sites sont formés sur un monolithe qui est une structure poreuse présentant une grande superficie de contact avec les gaz d'échappement traversant le pot, et qui est revêtue de diverses substances chimiques ayant des propriétés catalytiques.

Cette fonction permet de pallier la combustion incomplète à l'intérieur des cylindres du moteur mais ne permet d'éliminer les substances polluantes que lorsque le mélange carburé initial est un mélange stoechiométrique.

Aussi, les pots catalytiques possèdent également la faculté de "stocker" des atomes d'oxygène par oxydation de substances chimiques présentes dans le catalyseur, telles que le cérium.

Ainsi, lorsque les gaz d'échappement qui entrent dans le pot catalytique sont issus de la combustion d'un mélange pauvre, ils comportent des atomes d'oxygène en excès et ceux-ci sont stockés dans le pot catalytique. Lorsque le mélange brûlé dans le moteur est riche, les gaz d'échappement qui arrivent dans le pot contiennent des molécules réductrices, mais celles-ci peuvent se combiner avec les atomes d'oxygène, précédemment stockés dans le pot catalytique au cours d'une phase de fonctionnement avec un mélange pauvre, pour produire de l'eau et du dioxyde de carbone.

Le pot catalytique a donc pour fonction non seulement de favoriser des réactions chimiques entre des substances contenues dans les gaz d'échappement, mais il a également pour fonction d'être un stock-tampon de molécules d'oxygène qui permet de réguler la composition des gaz émis dans l'atmosphère à la sortie du pot.

Toutefois, la taille de ce stock-tampon n'est pas illimitée. Si le moteur fonctionne pendant une trop longue période en brûlant un mélange pauvre, le pot catalytique devient saturé en oxygène, c'est-à-dire par exemple que la totalité des atomes de cérium auront été oxydés. Les atomes d'oxygène excédentaires non utilisés lors de la combustion seront alors émis dans l'atmosphère, combinés à des atomes d'azote sous la forme d'oxydes d'azote (NOx) du fait de la haute température des gaz dans le cylindre.

Au contraire, si le moteur fonctionne pendant trop longtemps en brûlant un mélange riche, le stock d'atomes d'oxygène du pot catalytique s'épuise et il y a alors émission, dans l'air, de molécules d'hydrocarbures (HC) et de monoxyde de carbone (CO).

Ainsi, pour limiter l'émission de polluants et pour utiliser au mieux les capacités du pot catalytique, il est nécessaire de contrôler le plus précisément possible le rapport air/carburant du mélange carburé qui est brûlé dans le moteur.

Il est connu pour cela d'utiliser une sonde agencée dans le circuit des gaz d'échappement entre le moteur et le pot catalytique. Une telle sonde, généralement du type "EGO" ou "lambda", ou du type "UEGO" permet de déterminer la teneur en oxygène des gaz d'échappement.

Une telle sonde permet de déterminer si le mélange carburé introduit dans le cylindre est riche ou pauvre et cette information est transmise à un calculateur qui commande les injecteurs du moteur pour modifier en conséquence la quantité de carburant injecté.

Toutefois, le pot catalytique est sujet à un vieillissement qui correspond notamment à une baisse de la capacité de stockage en oxygène et à une baisse du nombre de sites catalytiques sur lesquels les substances chimiques nocives peuvent réagir entre elles.

Aussi, pour tenir compte de ce phénomène, il a été proposé de disposer une seconde sonde en aval du catalyseur dans le circuit d'échappement.

Une telle sonde mesure également la richesse des gaz d'échappement à la sortie du pot catalytique, c'est-à-dire en fait la comparaison entre le rapport réel entre molécules oxydante et molécules réductrices et le rapport stoechiométrique. La deuxième sonde permet donc de détecter la présence d'atomes d'oxygène en excès dans les gaz d'échappement qui trahissent un état saturé du stock-tampon formé par le pot.

Les normes à venir concernant les véhicules automobiles vont obliger à l'incorporation dans les systèmes d'échappement de moyens pour détecter un mauvais fonctionnement du pot catalytique, qu'il soit dû à un vieillissement progressif ou à une détérioration soudaine.

Dans le document US-A-5.487.269, il a déjà été proposé de mesurer le vieillissement ou l'endommagement du pot en évaluant la capacité de stockage de celui-ci en molécules d'oxygène.

Pour ce faire, le véhicule comporte une sonde proportionnelle en amont du pot et une sonde du type tout ou rien en aval du pot, c'est-à-dire une sonde pour lequel le signal de sortie d'une valeur haute à une valeur basse pour une valeur de seuil de la concentration en oxygène.

Le procédé de surveillance de fonctionnement du pot décrit dans ce document consiste essentiellement à commander le système d'alimentation du moteur de manière à lui fournir un mélange carburé dont la richesse est affectée de variations périodiques autour de la valeur unitaire correspondant au rapport stoechiométrique. Le moteur fonctionne ainsi alternativement avec un mélange riche ou avec un mélange pauvre pendant la durée correspondant à une demi-période de la variation de richesse.

Si le pot catalytique a conservé une bonne capacité de stockage des molécules d'oxygène, les réactions catalytiques pourront se produire dans le pot de manière à oxyder ou réduire les substances chimiques nocives et la sonde aval ne voit pas de variation notable de la concentration en oxygène des gaz d'échappement à la sortie du pot. Au contraire, si le pot a vu sa capacité de stockage réduite, suite à un vieillissement progressif ou suite à une défaillance brutale, une partie des substances nocives présentes dans les gaz d'échappement ne sera pas transformée par catalyse et la sonde aval verra alors la concentration d'oxygène varier de sorte que son signal basculera entre ses valeurs haute et basse.

Le document EP-A-0.588.324 décrit une méthode similaire utilisant comme critères de vieillissement la moyenne et la variance du signal de sortie de la sonde aval.

Dans les procédés décrits dans ces documents, il est généralement prévu d'agir sur la consigne de variation de richesse en fonction essentiellement du signal fourni par la sonde aval, notamment dans le but d'opérer un centrage des variations de consigne afin que la valeur moyenne de ces variations soit positionnée à un niveau de richesse pour lequel on obtient un basculement du signal de sortie de la sonde aval.

Cependant, dans ces procédés, il n'est pas tenu compte du fait qu'il peut y avoir un écart entre la consigne de richesse déterminée par une unité centrale de calcul et la richesse réelle du mélange carburé qui est effectivement fournie au moteur. En effet, divers paramètres physiques et mécaniques peuvent intervenir pour qu'il y ait un tel écart.

Or, la présence d'un tel écart peut fausser l'interprétation des variations du signal de sortie de la sonde aval. En effet, des variations de ce signal peuvent éventuellement être dues, au moins en partie, à l'écart entre la consigne de richesse et la richesse réelle du mélange carburé et non à une dégradation du pot.

L'invention a donc pour objet de proposer des moyens qui permettent d'une part de limiter les écarts entre les valeurs de consigne de richesse et les valeurs réelles de la richesse et/ou de limiter l'influence de ces écarts dans la détermination du critère qui sera appliqué pour décider du bon fonctionnement ou non du pot catalytique.

Dans ce but, l'invention propose un procédé du type décrit précédemment, caractérisé en ce que lors de l'exécution du procédé de surveillance, la commande de la variation de richesse est régulée en boucle fermée en fonction du signal délivré par la sonde amont et en ce que
- le signal délivré par la sonde amont est utilisé pour, en cas d'écart par rapport au niveau de consigne, corriger la richesse du mélange carburé de telle sorte que, sur la demi-période considérée, la quantité de ladite substance chimique qui est réellement susceptible d'être stockée ou consommée dans le catalyseur au cours de la demi-période correspondante soit sensiblement égale à la quantité de ladite substance chimique qui serait susceptible d'être stockée ou consommée dans le catalyseur si le moteur était alimenté avec un mélange carburé de richesse égale au niveau de consigne.

Selon d'autres caractéristiques de l'invention :
- le signal délivré par la sonde amont est utilisé pour, en cas d'écart, ramener la richesse du mélange carburé au niveau de consigne ;
- le signal délivré par la sonde amont est utilisé pour, en cas d'écart par rapport au niveau de consigne, corriger la richesse du mélange carburé de telle sorte que, sur la demi-période considérée, la valeur moyenne de la richesse mesurée soit sensiblement égale à la valeur moyenne du niveau de consigne ;
- le signal délivré par la sonde amont est utilisé pour, en cas d'écart par rapport au niveau de consigne, corriger la durée de la demi-période correspondante ;
- le procédé comporte une étape consistant à calculer, lors de chaque demi-période d'une série de périodes, un critère intermédiaire représentatif de l'écart-type de l'intensité du signal délivré par la sonde aval, et en ce que le procédé comporte une étape de calcul d'un critère final qui tient compte des critères intermédiaires dont chacun est pondéré par un coefficient ;
- chaque coefficient de pondération est une fonction de la différence entre la quantité de ladite substance chimique qui est réellement susceptible d'être stockée ou consommée dans le catalyseur au cours de la demi-période correspondante et la quantité de ladite substance chimique qui serait susceptible d'être stockée ou consommée dans le catalyseur si le moteur était alimenté avec un mélange carburé de richesse égale au niveau de consigne sur la demi-période ;
- chaque coefficient de pondération est une fonction de l'écart entre la valeur moyenne de la richesse mesurée et la valeur moyenne du niveau de consigne sur la demi-période correspondante ;
- le procédé comporte une étape d'ajustement de la valeur moyenne, sur une période, du niveau de consigne de la richesse par rapport à une valeur de richesse pour laquelle le signal de la sonde aval bascule d'une valeur haute à une valeur basse ;
- la variation de la richesse est du type en créneaux ;
- la variation de la richesse est de type sinusoïdale ;
- la substance chimique susceptible d'être stockée dans le pot catalytique est l'oxygène ; et
- le pot catalytique est en outre susceptible de stocker des oxydes d'azote, et la surveillance de la capacité de stockage des oxydes d'azotes est réalisée en surveillant la capacité de stockage de l'oxygène.

D'autres caractéristiques et avantages de l'invention apparaîtront à la lecture de la description détaillée qui suit pour la compréhension de laquelle on se reportera aux dessins annexés dans lesquels :
- la figure 1 est un diagramme schématique illustrant les principaux organes nécessaires à la mise en oeuvre du procédé selon l'invention ;
- les figures 2A et 2B sont des graphes illustrant respectivement les variations de richesse R du mélange carburé et les variations du signal V de sortie de la sonde aval en fonction du temps lors de la mise en oeuvre d'un procédé selon l'invention ;
- les figures 3A et 3B sont des graphes similaires à ceux des figures 2A et 2B illustrant plus particulièrement l'étape d'ajustement de la valeur moyenne de la variation de richesse R pour la mise en oeuvre du procédé ;
- la figure 4 est un graphe illustrant un premier mode de correction de la variation de richesse R grâce au procédé selon l'invention ; et
- la figure 5 est une vue similaire à celle de la figure 4 illustrant un second mode de correction obtenu grâce au procédé selon l'invention.

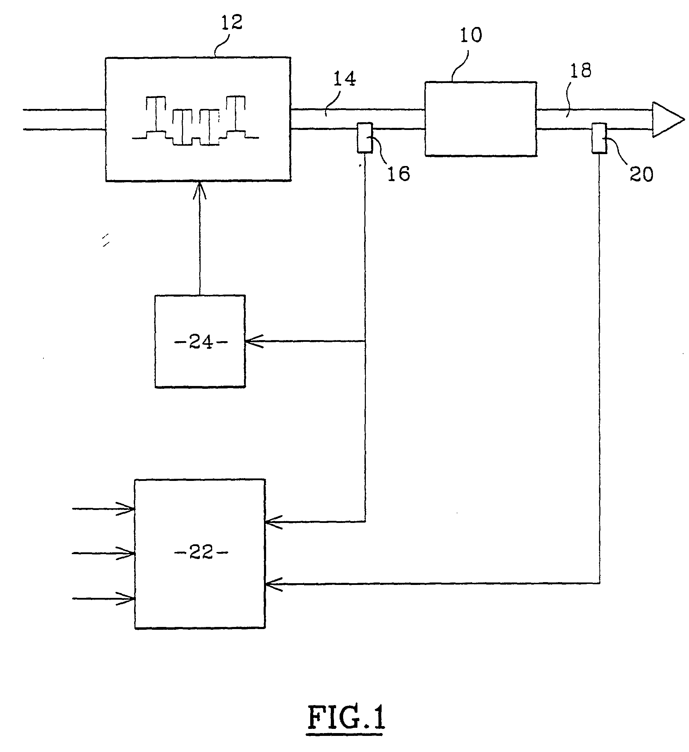

On a illustré sur la figure 1 les principaux composants nécessaires à la mise en oeuvre de l'invention.

Le procédé selon l'invention concerne la surveillance du fonctionnement d'un pot catalytique 10 qui est destiné à traiter les gaz d'échappement issus d'un moteur thermique faisant partie d'un groupe motopropulseur 12 d'un véhicule automobile. Le groupe motopropulseur 12 comporte, en plus du moteur thermique, des moyens d'alimentation qui réalisent un mélange carburé comportant un certain rapport entre l'air et le carburant.

La richesse d'un tel mélange carburé est déterminée comme étant la division de ce rapport par le rapport stoechiométrique des masses d'air et de carburant qui permet d'obtenir une combustion complète du mélange. Le rapport stoechiométrique est d'environ 14,7. Un mélange carburé au rapport stoechiométrique présente donc une richesse égale à 1, appelée ci-après richesse unitaire.

Le groupe motopropulseur 12 comporte également tous les autres accessoires nécessaires au fonctionnement du moteur tels que démarreur, alternateur, système de refroidissement, etc.

Les gaz d'échappement issus de la combustion à l'intérieur du moteur sont conduits vers le pot 10 au travers d'un premier tronçon de conduite 14 dans laquelle est interposée une première sonde amont 16 qui délivre un signal de sortie proportionnel à la concentration en oxygène des gaz d'échappement dans le tronçon de conduite 14. Une telle sonde est par exemple une sonde de type "UEGO".

En aval du pot d'échappement, les gaz sont rejetés dans l'air par l'intermédiaire d'un second tronçon de conduite 18 dans lequel est interposée une seconde sonde aval 20 qui est une sonde de type "tout ou rien". Le signal de sortie de la sonde aval 20, une tension V, bascule entre une valeur haute et une valeur basse lorsque la concentration en oxygène des gaz d'échappement en aval du pot catalytique 10 franchit une valeur de seuil déterminée. Une telle sonde est notamment connue sous l'appellation sonde "EGO" ou sonde "LAMBDA".

Pour la mise en oeuvre du procédé selon l'invention, il est prévu une unité centrale électronique de gestion des consignes de richesse 22. Cette unité centrale 22 reçoit des informations à la fois en provenance du moteur, telles que par exemple sa vitesse de rotation, la température de son liquide de refroidissement ou la quantité d'air admise dans le moteur. L'unité centrale 22 reçoit aussi les signaux de sortie des sondes amont 16 et aval 20 de manière à pouvoir déterminer la consigne de richesse qui doit être transmise au dispositif d'alimentation du moteur thermique.

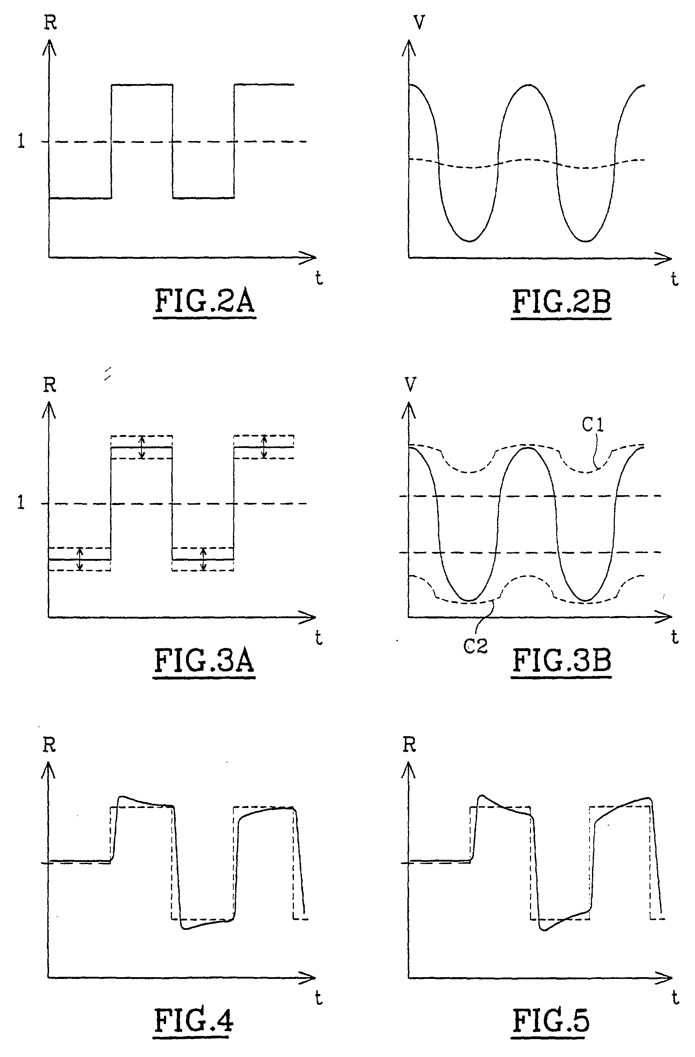

Conformément aux enseignements de l'invention, l'unité centrale 22 de gestion des consignes de richesse est apte à mettre en oeuvre, lorsque certaines conditions sont réunies, un procédé de surveillance du fonctionnement du pot 10 dont le principe est illustré aux figures 2A et 2B.

En effet, selon ce procédé, l'unité 22 commande le dispositif d'alimentation du moteur de telle sorte que la richesse du mélange carburé d'alimentation du moteur est affectée d'une variation périodique du type de celle illustrée à la figure 2A. Ici, la variation représentée est une variation de type "créneau" mais d'autres formes de variations périodiques peuvent être utilisées, par exemple des variations sinusoïdales.

En fonction du temps, la consigne de richesse est égale, pendant une demi-période, à un niveau de consigne supérieur NCS et, sur l'autre demi-période de la période considérée de la consigne de richesse, à un niveau de consigne inférieur NCI. S'agissant de variations de type "créneau", les niveaux de consigne supérieur et inférieur sont des constantes, mais, par exemple dans le cas d'une variation sinusoïdale de la consigne, ils peuvent être variables dans le temps.

Comme on peut le voir sur la figure 2A, les niveaux de consigne supérieur NCS et inférieur NCI sont respectivement supérieurs et inférieurs à la valeur de richesse unitaire. Selon ce procédé, les niveaux de consigne NCS et NCI et la période de la variation de la consigne de richesse sont choisis de manière que, lorsque le pot catalytique est dégradé ou usagé, les capacités de stockage en oxygène de celui-ci sont dépassées par les quantités de molécules oxydantes ou réductrices produites respectivement lors de chacune des demi-périodes.

Il en résulte donc que, lorsque le pot est vieilli, il se produit à chaque demi-période un basculement du signal de sortie V de la sonde aval entre une valeur haute et une valeur basse ainsi que cela est représenté en trait plein sur la figure 2B.

Bien entendu, du fait de la conception même des sondes de type "tout ou rien" utilisées, le basculement entre les deux valeurs n'est pas instantané, la forme de la courbe lors du basculement étant propre au type de sonde utilisé.

Au contraire, lorsque la variation de richesse illustrée à la figure 2A est imposée à un groupe motopropulseur muni d'un pot catalytique en bon état, les variations du signal de sortie de la sonde aval 20 sont très faibles et même nulles en théorie, le niveau de ce signal de sortie étant compris entre les valeurs limites haute et basse propres à la sonde.

Conformément aux enseignements de l'invention, il est prévu que la consigne de variation de richesse soit commandée en permanence en boucle fermée en fonction du signal délivré par la sonde amont 16.

Ainsi, entre l'unité centrale de gestion 22 et le groupe motopropulseur 12, il est interposé une unité de contrôle du suivi du contrôle de richesse 24. Cette unité de contrôle 24 reçoit en entrée la consigne de richesse telle que déterminée par l'unité centrale 22. Il reçoit également en entrée le signal de sortie de la sonde amont 16. Ce signal permet de déterminer, en fonction de la composition des gaz d'échappement, la richesse réelle du mélange carburé qui a été injecté dans le moteur à combustion interne du groupe motopropulseur 12. De plus, ce signal illustre de manière exacte la composition des gaz d'échappement tels qu'ils pénètrent à l'intérieur du pot catalytique 10.

Généralement, ainsi que cela a été illustré aux figures 3A et 3B, il peut être nécessaire de décaler les niveaux de consigne supérieur et inférieur pour obtenir effectivement un basculement de la sonde aval.

En effet, en fonction de la concentration d'oxygène pour laquelle celle-ci bascule, il est nécessaire de centrer la variation de consigne. En effet, si la valeur moyenne de consigne de richesse sur une période de la variation est trop basse, la sonde aval 18 aura tendance à voir, en permanence, un excès d'oxygène si bien que le signal de sortie de la sonde aval sera sensiblement constant ainsi qu'illustré sur la figure 3A en pointillés par la courbe C1. Même pendant les demi-périodes correspondant à un mélange globalement riche, on ne parviendra pas à faire basculer cette sonde. Au contraire, si la valeur moyenne de consigne est globalement riche, le signal de sortie de la sonde aval 20 restera sensiblement égal à sa valeur basse, avec éventuellement un faible écart lors des demi-périodes de fonctionnement en mélange pauvre ainsi que cela est représenté en pointillés par la courbe C2.

Aussi, le procédé de surveillance selon l'invention comporte de préférence une étape préliminaire de centrage de la variation de consigne de sorte que le niveau moyen de celle-ci soit ajusté en fonction du basculement de la sonde aval 20.

L'unité de contrôle 24 du suivi de consigne de richesse peut être utilisée de différentes manières.

En effet, cette unité 24 peut n'être utilisée que pour mesurer en temps réel l'écart entre le niveau de consigne de richesse déterminé par l'unité centrale 22 et la richesse réelle du mélange carburé fourni au moteur.

Cependant, de préférence, l'unité de contrôle de consigne 24 aura pour tâche de modifier le niveau de commande réellement transmis au dispositif d'alimentation du moteur pour que la richesse réelle du mélange carburé s'approche du niveau de consigne déterminé par l'unité centrale 22.

Ainsi, on a illustré sur la figure 5 un premier mode d'intervention de l'unité de contrôle 24. Sur ce graphe, il est représenté en traits pointillés le niveau de consigne de la variation de richesse tel que déterminé par l'unité centrale de gestion 22. En traits continus, il est représenté la richesse réelle du mélange carburé fourni au moteur telle qu'elle est mesurée par la sonde amont 16. On peut voir qu'ainsi l'unité de contrôle 24 tend, à chaque instant, à corriger la richesse réelle du mélange carburé fourni au moteur pour rapprocher celle-ci du niveau de consigne déterminé par l'unité centrale 22.

Dans un second mode d'intervention de l'unité de contrôle du suivi de consigne 24, la richesse du mélange carburé est corrigée en fonction du signal délivré par la sonde amont 16 pour que, sur une demi-période, le niveau moyen de la richesse réelle soit égal à la valeur moyenne du niveau de consigne déterminée par l'unité centrale 22 pour cette demi-période.

Ainsi, si par exemple en début de demi-période le niveau réel de richesse est supérieur au niveau de consigne, l'unité de contrôle 24 tendra à commander le dispositif d'alimentation du moteur de telle sorte que, en fin de cette demi-période, la richesse réelle devienne inférieure au niveau de consigne.

Ainsi, sur la demi-période considérée, on peut estimer que les quantités de molécules oxydantes et réductrices produites au cours de la combustion sont sensiblement égales aux quantités de ces molécules qui auraient été produites si le moteur avait été alimenté rigoureusement selon le niveau de consigne défini par l'unité centrale de gestion 22. En d'autres termes, la quantité d'oxygène qui est réellement susceptible d'être stockée ou consommée dans le catalyseur au cours de la demi-période correspondante est alors sensiblement égale à la quantité d'oxygène qui serait susceptible d'être stockée ou consommée dans le catalyseur si le moteur était alimenté avec un mélange carburé de richesse égale au niveau de consigne.

On peut aussi arriver à ce même résultat en modifiant la durée effective de la demi-période considérée, c'est-à-dire en avançant ou en retardant le basculement entre l'alimentation en mélange pauvre et en mélange riche.

L'unité de contrôle du suivi de consigne 24 peut aussi être utilisée pour affiner l'évaluation de l'état du pot catalytique 10 qui est effectuée grâce aux informations fournies par les sondes 16, 20.

En effet, pour évaluer l'état du pot, le procédé consiste à calculer, à chaque instant, l'écart entre le niveau instantané du signal de sortie délivré par la sonde aval 20 et une valeur moyenne de ce signal. Cet écart est ensuite filtré, par exemple par un filtre passe-haut ou par un filtre passe-bande, et il est calculé, sur une période, un critère de période qui est égal à la moyenne de cet écart sur la période. Ce critère de période constitue une valeur représentative de l'écart type du signal de sortie de la sonde aval sur une période de la variation de la consigne de richesse.

On peut donc utiliser, comme critère final déterminé par le procédé, la moyenne de l'ensemble des critères de période pendant la durée du procédé qui est une durée prédéterminée. Pour déterminer si le pot est en état de fonctionner correctement, on compare le critère final à des valeurs prédéterminées stockées dans une mémoire associée par exemple à l'unité centrale de gestion.

Cependant, selon les enseignements de l'invention, il est aussi possible de déterminer le critère final non pas comme étant la simple moyenne des critères de période, mais une moyenne pondérée des critères de période, le coefficient de pondération associé à chacun des critères de période étant alors déterminé en fonction de l'écart entre la richesse réelle et le niveau de consigne de richesse lors de la période considérée.

A titre d'exemple, il est possible de déterminer au niveau de l'unité de contrôle 24 une variable d'écart représentative de la différence entre d'une part la quantité d'une molécule oxydante ou réductrice qui est effectivement produite par la combustion au cours d'une période et, d'autre part, la quantité qui aurait été produite au cours de la même période si le niveau de consigne de richesse du mélange carburé avait été rigoureusement respecté. Le coefficient de pondération associé au critère de période serait alors par exemple une valeur comprise entre 0 et 1 inversement proportionnelle à la valeur de la variable d'écart.

Ainsi, l'influence dans le critère final du critère de période serait diminuée pour les périodes au cours desquelles la richesse réelle du mélange carburé fourni au moteur a différé de la richesse théorique prévue par l'unité centrale de gestion.

Le procédé selon l'invention est donc à la fois fiable et précis. Il peut de plus être mis en oeuvre dans une plus large plage de conditions de fonctionnement du moteur du fait de la prise en compte des écarts entre les valeurs théorique et réelle de la richesse. Pour la même raison, seul un nombre réduit de périodes de la variation est nécessaire pour aboutir à un critère final représentatif, si bien que la durée de mise en oeuvre du procédé de surveillance du pot est particulièrement réduite.

Le procédé selon l'invention est susceptible d'être utilisé non seulement pour des pots catalytiques "trois voies" classiques mais aussi pour des pots de type "Nox-trap" qui possèdent en plus une capacité de stockage des oxydes d'azote car il y a une forte corrélation entre les dégradations des fonctions de stockage des oxydes d'azote et de l'oxygène. Du fait de cette corrélation, la surveillance de la capacité de stockage des molécules d'oxygène dans le pot sera un indicateur fiable de la capacité de stockage des molécules d'oxydes d'azote et le procédé selon l'invention permet, à lui seul, de surveiller le fonctionnement global d'un tel pot catalytique.

## Revendications

1. Procédé de surveillance du fonctionnement d'un pot catalytique de véhicule automobile, du type dans lequel le véhicule comporte un moteur à combustion interne (12) équipé d'un pot catalytique (10) de traitement des gaz d'échappement en aval du moteur, du type dans lequel le véhicule comporte des moyens de commande de la richesse d'un mélange carburé d'alimentation du moteur, le moteur rejetant dans les gaz d'échappement des substances chimiques dont la nature varie en fonction de la valeur de la richesse autour d'une valeur de richesse unitaire correspondant à un mélange stoechiométrique, du type dans lequel, pour certains modes de fonctionnement du moteur, l'une des substances chimiques rejetées par le moteur est susceptible d'être stockée dans le pot catalytique, tandis que pour d'autres modes de fonctionnement, la substance chimique précédemment stockée est consommée au cours de réactions chimiques de catalyse, du type dans lequel deux sondes (16, 20), agencées dans des conduites en amont et en aval du pot catalytique, délivrent chacune un signal qui dépend de la concentration de ladite substance chimique, respectivement en amont et en aval du pot, du type dans lequel le signal délivré par la sonde amont (16) est proportionnel à la concentration de ladite substance et est représentatif de la richesse du mélange carburé, tandis que la sonde aval (20) est une sonde de type "tout ou rien", du type dans lequel le procédé commande une variation périodique de la richesse du mélange carburé en commandant la richesse à un niveau de consigne supérieur à la richesse unitaire sur une demi-période, et inférieur à la richesse unitaire sur l'autre demi-période de la période considérée, et du type dans lequel le procédé détermine une valeur représentative des variations de l'intensité du signal délivré par la sonde aval (20), **caractérisé en ce que**
lors de l'exécution du procédé de surveillance, la commande de la variation de richesse est régulée en boucle fermée en fonction du signal délivré par la sonde amont (16) et **en ce que**
le signal délivré par la sonde amont (16) est utilisé pour, en cas d'écart par rapport au niveau de consigne, corriger la richesse du mélange carburé de telle sorte que, sur la demi-période considérée, la quantité de ladite substance chimique qui est réellement susceptible d'être stockée ou consommée dans le catalyseur au cours de la demi-période correspondante soit sensiblement égale à la quantité de ladite substance chimique qui serait susceptible d'être stockée ou consommée dans le catalyseur si le moteur était alimenté avec un mélange carburé de richesse égale au niveau de consigne.

2. Procédé selon la revendication 1, **caractérisé en ce que** le signal délivré par la sonde amont (16) est utilisé pour, en cas d'écart, ramener la richesse du mélange carburé au niveau de consigne.

3. Procédé selon la revendication 1 ou 2 **caractérisé en ce que** le signal délivré par la sonde amont (16) est utilisé pour, en cas d'écart par rapport au niveau de consigne, corriger la richesse du mélange carburé de telle sorte que, sur la demi-période considérée, la valeur moyenne de la richesse mesurée soit sensiblement égale à la valeur moyenne du niveau de consigne.

4. Procédé selon la revendication 1 ou 2 **caractérisé en ce que** le signal délivré par la sonde amont (16) est utilisé pour, en cas d'écart par rapport au niveau de consigne, corriger la durée de la demi-période correspondante.

5. Procédé selon l'une quelconque des revendications précédentes, **caractérisé en ce que** le procédé comporte une étape consistant à calculer, lors de chaque demi-période d'une série de périodes, un critère intermédiaire représentatif de l'écart-type de l'intensité du signal délivré par la sonde aval, et **en ce que** le procédé comporte une étape de calcul d'un critère final qui tient compte des critères intermédiaires dont chacun est pondéré par un coefficient.

6. Procédé selon la revendication 5, **caractérisé en ce que** chaque coefficient de pondération est une fonction de la différence entre la quantité de ladite substance chimique qui est réellement susceptible d'être stockée ou consommée dans le catalyseur au cours de la demi-période correspondante et la quantité de ladite substance chimique qui serait susceptible d'être stockée ou consommée dans le catalyseur si le moteur était alimenté avec un mélange carburé de richesse égale au niveau de consigne sur la demi-période.

7. Procédé selon la revendication 6, **caractérisé en ce que** chaque coefficient de pondération est une fonction de l'écart entre la valeur moyenne de la richesse mesurée et la valeur moyenne du niveau de consigne sur la demi-période correspondante.

8. Procédé selon l'une quelconque des revendications précédentes, **caractérisé en ce que** le procédé comporte une étape d'ajustement de la valeur moyenne, sur une période, du niveau de consigne de la richesse par rapport à une valeur de richesse pour laquelle le signal de la sonde (20) aval bascule d'une valeur haute à une valeur basse.

9. Procédé selon l'une quelconque des revendications précédentes, **caractérisé en ce que** la variation de la richesse est du type en créneaux.

10. Procédé selon l'une quelconque des revendications précédentes, **caractérisé en ce que** la variation de la richesse est de type sinusoïdale.

11. Procédé selon l'une quelconque des revendications précédentes, **caractérisé en ce que** la substance chimique susceptible d'être stockée dans le pot catalytique est l'oxygène.

12. Procédé selon la revendication 11, **caractérisé en ce que** le pot catalytique est en outre susceptible de stocker des oxydes d'azote (Nox), et **en ce que** la surveillance de la capacité de stockage des oxydes d'azotes est réalisée en surveillant la capacité de stockage de l'oxygène.

## Claims

1. A process for monitoring the functioning of a motor vehicle catalytic converter of the type in which the vehicle comprises an internal combustion engine (12) equipped with a catalytic converter (10) for treatment of the exhaust gases downstream of the engine, of the type in which the vehicle comprises means for controlling the richness of a vaporised feed mixture for the engine, the engine discharging into the exhaust gases chemical substances, the nature of which varies in dependence on the value of the richness around a unitary richness value corresponding to a stoichiometric mixture, of the type in which, for certain modes of operation of the engine, one of the chemical substances discharged by the engine is capable of being stored in the catalytic converter while, for other modes of operation, the previously stored chemical substance is consumed in the course of chemical catalysis reactions, of the type in which two probes (16, 20) arranged in conduits upstream and downstream of the catalytic converter each deliver a signal which depends on the concentration of said chemical substance upstream and downstream respectively of the converter, of the type in which the signal delivered by the upstream probe (16) is proportional to the concentration of said substance and is representative of the richness of the vaporised mixture while the downstream probe (20) is a probe of 'all or nothing' type, of the type in which the process controls a periodic variation in the richness of the vaporised mixture by controlling the richness at a reference level higher than the unitary richness over a half-period and lower than the unitary richness over the other half-period of the period being considered, and of the type in which the process determines a value representative of the variations in the intensity of the signal delivered by the downstream probe (20), **characterised in that**, when executing the monitoring process, the control of the richness variation is regulated in a closed loop in dependence on the signal delivered by the upstream probe (16), and that the signal delivered by the upstream probe (16) is used, in the case of a deviation in relation to the reference level, to correct the richness of the vaporised mixture in such a way that, over the half-period being considered, the quantity of said chemical substance which is really capable of being stored or consumed in the catalyst in the course of the corresponding half-period is substantially equal to the quantity of said chemical substance which would be capable of being stored or consumed in the catalyst if the engine were supplied with a vaporised mixture of a richness equal to the reference level.

2. A process according to claim 1 **characterised in that** the signal delivered by the upstream probe (16) is used in the event of a deviation to return the richness of the vaporised mixture to the reference level.

3. A process according to claim 1 or claim 2 **characterised in that** the signal delivered by the upstream probe (16) is used in the event of a deviation with respect to the reference level to correct the richness of the vaporised mixture in such a way that, over the half-period being considered, the mean value of the measured richness is substantially equal to the mean value of the reference level.

4. A process according to claim 1 or claim 2 **characterised in that** the signal delivered by the upstream probe (16) is used in the event of a deviation with respect to the reference level to correct the duration of the corresponding half-period.

5. A process according to any one of the preceding claims **characterised in that** the process comprises a step which consists of calculating in each half-period of a series of periods an intermediate criterion representative of the typical deviation of the intensity of the current delivered by the downstream probe, and that the process comprises a step of calculating a final criterion which takes account of the intermediate criteria, each of which is weighted by a coefficient.

6. A process according to claim 5 **characterised in that** each weighting coefficient is a function of the difference between the quantity of said chemical substance which is really capable of being stored or consumed in the catalyst in the course of the corresponding half-period and the quantity of said chemical substance which would be capable of being stored or consumed in the catalyst if the engine were supplied with a vaporised mixture of a richness equal to the reference level over the half-period.

7. A process according to claim 6 **characterised in that** each weighting coefficient is a function of the deviation between the mean value of the measured richness and the mean value of the reference level over the corresponding half-period.

8. A process according to any one of the preceding claims **characterised in that** the process comprises a step of adjusting the mean value over a period of the reference level of the richness with respect to a richness value for which the signal from the downstream probe (20) fluctuates from a high value to a low value.

9. A process according to any one of the preceding claims **characterised in that** the variation in richness is of the square-wave type.

10. A process according to any one of the preceding claims **characterised in that** the variation in richness is of sinusoidal type.

11. A process according to any one of the preceding claims **characterised in that** the chemical substance capable of being stored in the catalytic converter is oxygen.

12. A process according to claim 11 **characterised in that** the catalytic converter is also capable of storing nitrogen oxides (Nox) and that monitoring of the capacity for the storage of nitrogen oxides is effected by monitoring the oxygen storage capacity.

## Patentansprüche

1. Verfahren zur Überwachung der Funktionsweise eines mit einem Katalysator versehenen Auspufftopfes für ein Kraftfahrzeug, wobei das Fahrzeug mit einem Verbrennungsmotor (12) ausgerüstet ist, dem der mit dem Katalysator versehene Auspufftopf (10) zur Behandlung der Abgase nachgeordnet ist, wobei das Fahrzeug eine Anordnung zur Steuerung der Anreicherung des Kraftstoffgemisches für den Motor aufweist, wobei der Motor bestimmte chemische Substanzen mit den Abgasen abgibt, deren Art als Funktion des Wertes der Anreicherung um eine vorgegebene Einheitsanreicherung variiert, die einem stöchiometrischen Gemisch entspricht, wobei für bestimmte Betriebszustände des Motors eine der vom Motor abgegebenen chemischen Substanzen im Katalysator des Auspufftopfes gespeichert wird, während für andere Betriebszustände die vorher gespeicherte Substanz verbraucht wird durch chemische Katalysereaktionen, wobei zwei Sonden (16, 20) stromaufwärts und stromabwärts in den Leitungen des mit dem Katalysator versehenen Auspufftopfes angeordnet sind, die jeweils ein Signal abgeben, das von der Konzentration stromaufwärts bzw. stromabwärts des Auspufftopfes dieser chemischen Substanz abhängig ist, wobei das von der stromaufwärtigen Sonde (16) abgegebene Signal zur Konzentration der chemischen Substanz proportional ist und damit zur Anreicherung des Kraftstoffgemisches, während die stromabwärtige Sonde (20) eine Alles-oder-nichts-Sonde ist, wobei das Verfahren eine periodische Variation der Anreicherung des Kraftstoffgemisches durchführt durch Steuerung der Anreicherung auf einen Sollwert oberhalb der vorgegebenen Einheitsanreicherung über eine Halbperiode und auf einen Sollwert unterhalb der Einheitsanreicherung über die andere Halbperiode der in Frage kommenden Periode und wobei das Verfahren einen Wert ermittelt für die Variationen der Intensität des von der stromabwärtigen Sonde (20) stammenden Signals, **dadurch gekennzeichnet, dass** bei der Durchführung des Verfahrens zur Überwachung die Steuerung der Variation der Anreicherung in einer geschlossenen Schleife erfolgt als Funktion des von der stromaufwärtigen Sonde (16) stammenden Signals und dass das von der stromaufwärtigen Sonde (16) stammende Signal dazu verwendet wird, dass im Fall einer Abweichung vom Sollwert die Anreicherung des Gemisches derart korrigiert wird, dass über die entsprechende Halbperiode die Menge der tatsächlich im Katalysator während der zugehörigen Halbperiode gespeicherten oder verbrauchten chemischen Substanz im wesentlichen gleich der Menge der chemischen Substanz ist, die im Katalysator gespeichert oder verbraucht worden wäre, wenn der Motor mit einem Gemisch betrieben worden wäre, dessen Anreicherung gleich dem Sollwert ist.

2. Verfahren nach Anspruch 1, **dadurch gekennzeichnet, dass** das von der stromaufwärtigen Sonde (16) stammende Signal dazu verwendet wird, im Fall einer Abweichung die Anreicherung des Kraftstoffgemisches auf den Sollwert zurückzuführen.

3. Verfahren nach Anspruch 1 oder 2, **dadurch**
**gekennzeichnet, dass** das von der stromaufwärtigen Sonde (16) stammende Signal dazu verwendet wird, im Fall einer Abweichung vom Sollwert die Anreicherung des Gemisches derart zu korrigieren, dass während der entsprechenden Halbperiode der Mittelwert der gemessenen Anreicherung im wesentlichen gleich dem Mittelwert des Sollwertes ist.

4. Verfahren nach einem der Ansprüche 1 oder 2, **dadurch gekennzeichnet, dass** das von der stromaufwärtigen Sonde (16) stammende Signal dazu verwendet wird, im Fall einer Abweichung vom Sollwert die Dauer der entsprechenden Halbperiode zu korrigieren.

5. Verfahren nach einem der vorhergehenden Ansprüche, **dadurch gekennzeichnet, dass** es einen Schritt aufweist, der darin besteht, während einer jeden Halbperiode einer Reihe von Perioden ein Zwischenkriterium zu berechnen für die Art der Abweichung der Intensität des von der stromabwärtigen Sonde stammenden Signals und dass das Verfahren einen Schritt des Berechnens eines endgültigen Kriteriums aufweist, bei dem die Zwischenkriterien berücksichtigt werden, deren jedes mittels eines Koeffizienten gewichtet wird.

6. Verfahren nach Anspruch 5, **dadurch gekennzeichnet, dass** jeder Koeffizient der Wichtung eine Funktion ist der Differenz zwischen der Menge der chemischen Substanz, die tatsächlich im Katalysator gespeichert oder verbraucht wird während der entsprechenden Halbperiode und derjenigen Menge der chemischen Substanz, die im Katalysator gespeichert oder verbraucht worden wäre, wenn der Motor mit einem Gemisch betrieben worden wäre, dessen Anreicherung gleich dem Sollwert während dieser Halbperiode ist.

7. Verfahren nach Anspruch 6, **dadurch gekennzeichnet, dass** jeder Koeffizient der Wichtung eine Funktion ist der Abweichung zwischen dem Mittelwert der gemessenen Anreicherung und dem Mittelwert des Sollwertes über die entsprechende Halbperiode.

8. Verfahren nach einem der vorhergehenden Ansprüche, **dadurch gekennzeichnet, dass** das Verfahren einen Schritt der Anpassung des Mittelwertes des Sollwertes der Anreicherung über eine Periode aufweist bezüglich eines Wertes der Anreicherung, für den das Signal der stromabwärtigen Sonde (20) vom oberen Wert auf den unteren Wert kippt.

9. Verfahren nach einem der vorhergehenden Ansprüche, **dadurch gekennzeichnet, dass** die Variation der Anreicherung rechteckförmig ist.

10. Verfahren nach einem der vorhergehenden Ansprüche, **dadurch gekennzeichnet, dass** die Variation der Anreicherung sinusförmig ist.

11. Verfahren nach einem der vorhergehenden Ansprüche, **dadurch gekennzeichnet, dass** die im Katalysator des Auspufftopfes speicherbare chemische Substanz Sauerstoff ist.

12. Verfahren nach einem der vorhergehenden Ansprüche, **dadurch gekennzeichnet, dass** der Katalysator im Auspufftopf außerdem in der Lage ist, Stickoxyde (NOx) zu speichern und dass die Überwachung des Speichervermögens für Stickoxyde mittels der Überwachung des Speichervermögens für Sauerstoff erfolgt.
